(19) **Europäisches Patentamt European Patent Office Office européen des brevets**

(11) **EP 1 990 931 A1**

(12) **EUROPEAN PATENT APPLICATION**
published in accordance with Art. 158(3) EPC

(43) Date of publication:
**12.11.2008 Bulletin 2008/46**

(51) Int Cl.:
***H04B 7/08*** (2006.01)　　　***H04B 7/10*** (2006.01)

(21) Application number: **07714871.6**

(22) Date of filing: **23.02.2007**

(86) International application number:
**PCT/JP2007/053414**

(87) International publication number:
**WO 2007/099876 (07.09.2007 Gazette 2007/36)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.02.2006　JP 2006050004**

(71) Applicant: **Kyocera Corporation Kyoto-shi Kyoto 612-8501 (JP)**

(72) Inventors:
- **TONG, Fangwei**
  **Yokohama-shi, Kanagawa 224-8502 (JP)**
- **OKINO, Kenta**
  **Yokohama-shi, Kanagawa 224-8502 (JP)**

(74) Representative: **Bruce, Alexander Richard Henry et al**
**Venner Shipley LLP**
**20 Little Britain**
**London EC1A 7DH (GB)**

(54) **ADAPTIVE ARRAY ANTENNA DEVICE AND ADAPTIVE CONTROL METHOD**

(57)　An adaptive array antenna apparatus for performing adaptive control based on received signals received by a plurality of antenna elements which form an array antenna. The apparatus includes a computation part for computing an error of the received signals at different timings; an error comparison part for comparing the errors at the different timings with each other; and a weighting synthesizing part for performing weighting synthesis based on results of the comparison. Based on the results of the comparison, the computation part releases at least a part of computation resources required for the computation of the errors, and terminates the computation of the errors. Typically, the computation part performs the release of the computation resources when it is determined that the error has a minimum value, and terminates the computation of the errors.

FIG. 1

**Description**

TECHNICAL FIELD

The present invention relates to an adaptive array antenna apparatus and an adaptive control method therefor.
Priority is claimed on Japanese Patent Application No. 2006-050004, filed February 27, 2006, the content of which is incorporated herein by reference.

BACKGROUND ART

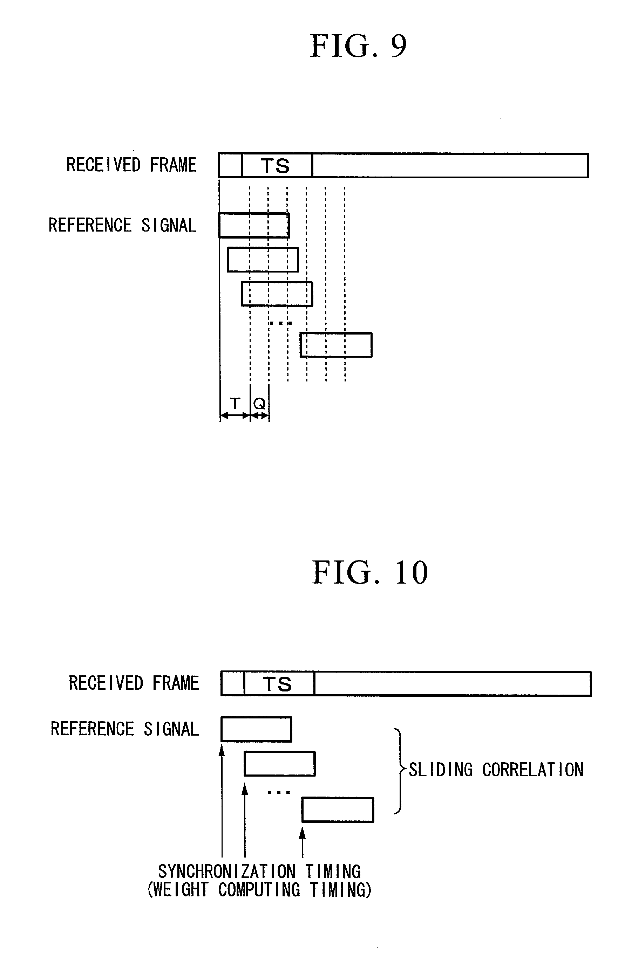

Conventionally, an adaptive array antenna apparatus has an array antenna including a plurality of antenna elements. Based on a signal received by each antenna element, an adaptive control process is performed so as to control each antenna element.
If an adaptive algor-ithm based on MMSE (minimum mean square error) is used in such an adaptive control process, a weight array (i.e., arrayed weights) is computed so that the square error between a known part (called a "training sequence", below) in each received signal and a specific reference signal is minimized. In order to accurately compute the weight array, it is important that the timing of the training sequence in each received signal conforms with that of the reference signal.
Conventionally, a sliding correlation method is known so as to establish synchronization between the timings of the training sequence and the reference signal (see Fig. 10). In Fig. 10, "TS" indicates a training sequence. In the sliding correlation method, at each synchronization timing, correlation between the training sequence (in the received signal) and the reference signal is determined, and a synchronization timing is selected based on the peak of the correlation.
However, in the sliding correlation technique, each antenna generally has an individual correlation-peak timing, and thus it is difficult to obtain the best synchronization timing in the adaptive control. Therefore, in a conventional technique disclosed in Patent Document 1, an adaptive control process is executed at each synchronization timing, and the best synchronization timing is determined based on the results of the adaptive control process.

Patent Document 1: Japanese Unexamined Patent Application, First Publication No. 2003-244110.

However, in the conventional technique disclosed in Patent Document 1, as the adaptive control process is executed at each synchronization timing, the amount of computation is large, which may increase the relevant cost.

DISCLOSURE OF INVENTION

In light of the above circumstances, an object of the present invention is to provide an adaptive array antenna apparatus and an adaptive control method therefor, by which the best synchronization timing for adaptive control can be obtained, and the amount of computation can be reduced.
In order to achieve the object, the present invention provides an adaptive array antenna apparatus for performing adaptive control based on received signals received by a plurality of antenna elements which form an array antenna, the apparatus comprising:

a computation part for computing an error of the received signals at different timings;
an error comparison part for comparing the errors at the different timings with each other; and
a weighting synthesizing part for performing weighting synthesis based on results of the comparison, wherein:

based on the results of the comparison, the computation part releases at least a part of computation resources required for the computation of the errors, and terminates the computation of the errors.

In a typical example, the computation part performs the release of the computation resources when it is determined that the error has a minimum value, and terminates the computation of the errors.
In this case, the computation part may perform the release of the computation resources when the error has decreased below a predetermined value, and terminates the computation of the errors.
The computation part also may perform the release of the computation resources when a variation in the error has changed from a decrease phase to an increase phase in accordance with the elapse of time, and terminates the computation of the errors.
The present invention also provides an adaptive control method for performing adaptive control based on received signals received by a plurality of antenna elements which form an array antenna, the method comprising:

an error computing step of computing an error of the received signals at different timings;

an error comparison step of comparing the errors at the different timings with each other;

a computation step of releasing computation resources required for the computation of the errors when it is determined based on the comparison that the error is relatively small; and

a control step of performing weighting control of each antenna element based on the computation resources when it is determined based on the comparison that the error is relatively small.

In a typical example, in the computation step, when it is determined that a timing at which the error has a minimum value has been obtained, the release of the computation resources is performed.

In another typical example, in the computation step, when the error has decreased below a predetermined value, the release of the computation resources is performed.

In another typical example, in the computation step, when a variation in the error has changed from a decrease phase to an increase phase in accordance with the elapse of time, the release of the computation resources is performed.

It is possible that the control step includes detecting a timing at which the error is minimized within a predetermined time period, and performing the weighting control of each antenna element at the detected timing.

In accordance with the present invention, a timing which provides a small error in adaptive control can be obtained, and it is possible to release computation resources of an adaptive control process having a large error. Therefore, the best synchronization timing for adaptive control can be obtained, and the amount of the relevant computation can be reduced.

BRIEF DESCRIPTION OF THE DRAWINGS

Fig. 1 is a block diagram showing the structure of an adaptive array antenna apparatus as an embodiment of the present invention.

Fig. 2 is a diagram for explaining the operation of the delay part 3 in Fig. 1.

Fig. 3 is a block diagram showing the structure of the weighting synthesizing part 4 in Fig. 1.

Fig. 4 is a block diagram showing the structure of the computation part 5 in Fig. 1.

Fig. 5 is a flowchart showing the flow of the adaptive control process in the present embodiment.

Fig. 6 is a diagram for explaining the adaptive control process in the present embodiment.

Fig. 7 is also a diagram for explaining the adaptive control process in the present embodiment.

Fig. 8 is also a diagram for explaining the adaptive control process in the present embodiment.

Fig. 9 is a diagram for explaining the adaptive control process in a variation of the present embodiment.

Fig. 10 is a diagram for explaining a conventional sliding correlation method.

BEST MODE FOR CARRYING OUT THE INVENTION

Below, an embodiment in accordance with the present invention will be explained with reference to the drawings.

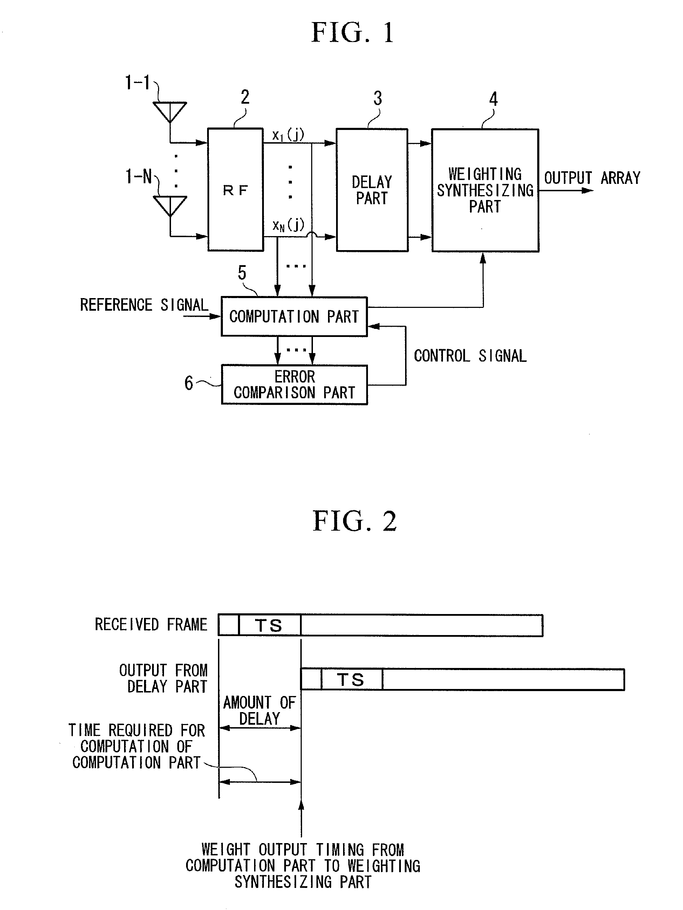

Fig. 1 is a block diagram showing an adaptive array antenna apparatus as an embodiment of the present invention. The adaptive array antenna apparatus of Fig. 1 includes a plurality of antenna elements 1-1 to 1-N (i.e., N antenna elements) which form an array antenna, a wireless part 2 (RF), a delay part 3, a weighting synthesizing part 4, a computation part 5, and an error comparison part 6.

In Fig. 1, the wireless part 2 subjects signals, which are received by the antenna elements 1-1 to 1-N, to a wireless reception process (baseband transformation, digitalization, and the like), and outputs received signals $x_1(j)$ to $x_N(j)$, where j indicates the sampling time. For convenience of explanations, $x_1(1)$ to $x_N(1)$ indicate the head samples (i.e., first received samples) of each antenna after the wireless reception process, and $x_1(j)$ to $x_N(j)$ indicate j-th received samples of each antenna after the wireless reception process.

The delay part 3 delays the received signals $x_1(j)$ to $x_N(j)$ to conform with the output timing of a weight vector array (i.e., arrayed weight vectors), which is output from the computation part 5 to the weighting synthesizing part 4, and outputs the delayed signals to the weighting synthesizing part 4.

As shown in Fig. 2, the amount of delay is determined based on the time required for computation of the computation part 5, so as to conform the output timing of the head (i.e., the received signals $x_1(1)$ to $x_N(1)$) of each received frame to the output timing of the weight vector array from the computation part 5.

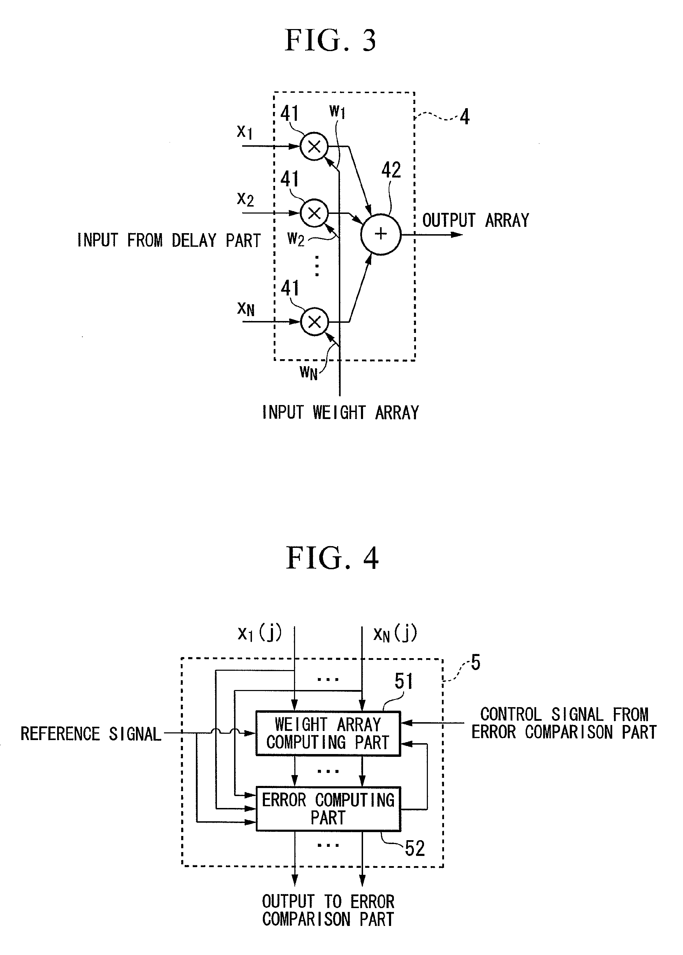

The weighting synthesizing part 4 subjects the received signals $x_1(j)$ to $x_N(j)$ to weighting using the weight vector array $[w_1, w_2,..., w_N]$ input from the computation part 5, and synthesizes the weighted signals, which are then output. Fig. 3 shows the structure of the weighting synthesizing part 4.

As shown in Fig. 3, the received signals $x_1(j)$ to $x_N(j)$ are respectively multiplied by the corresponding arrayed

weights $w_1$ to $w_N$ by multipliers 41, and are then added to each other, thereby producing an output (signal) of the array.

The computation part 5 performs an adaptive control process based on the received signals $x_1(j)$ to $x_N(j)$. Fig. 4 shows the structure of the computation part 5.

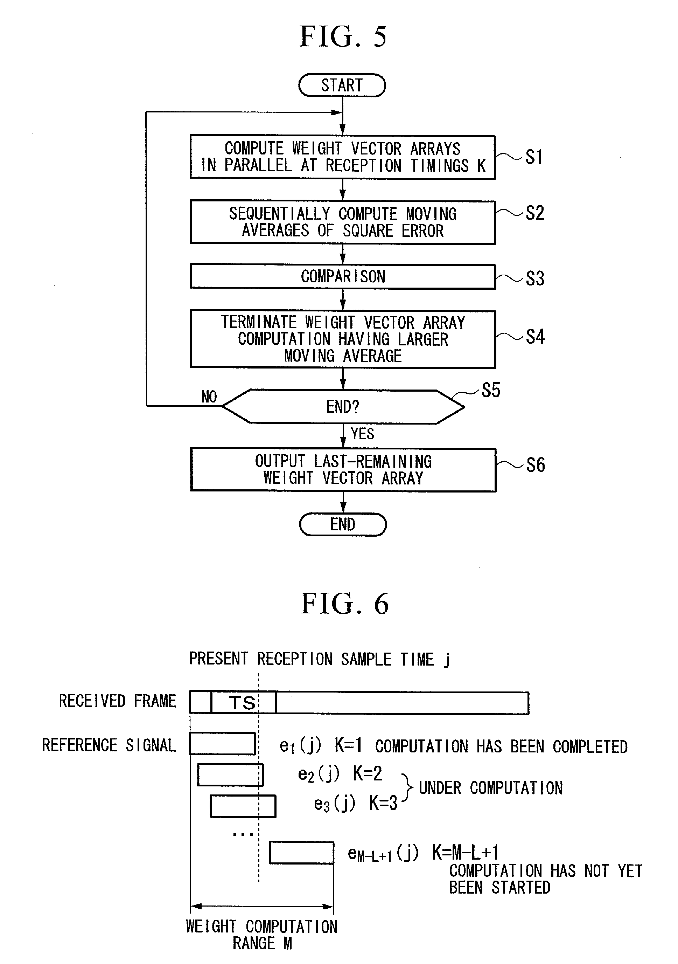

In Fig. 4, a weight array computing part 51 uses an MMSE-based adaptive algorithm (e.g., LMS, RLS, SMI, or the like) so as to compute a plurality of weight vector arrays ($w_{1K}(j)$, ..., $w_{NK}(j)$) in parallel at different timings K (K=1, 2, ..., M-L+1). Here, $w_{1K}(j)$,..., $w_{NK}(j)$ respectively indicate weighting factors of the antenna elements 1-1 to 1-N at timing K, M indicates a range for weight computation (see Fig. 6), and L indicates the length of the relevant reference signal (or a corresponding training sequence).

In accordance with a control signal from the error comparison part 6, the computation part 5 terminates the computation of the designated weight vector array from among the weight vector arrays which are computed in parallel. If the computation of the designated weight vector array has already been completed, the computation part 5 discards the result of the computation. The computation part 5 outputs the weight vector array as a result of the weight vector array computation, which has only been continued without being terminated, to the weighting synthesizing part 4.

An error computing part 52 computes an error with respect to a (j-K+1)th reference signal (d(j-K+1)) at timing K, by using the following formula (1). Each computation result of a moving average of the relevant square error (i.e., square of $e_K(j)$) is output to the error comparison part 6.

$$e_K(j) = d(j - K + 1) - \sum_{i=1}^{N} w_{iK}(j) x_i(j)$$

$$\cdots (1)$$

where K=1, ..., M-L+1.

The error comparison part 6 compares the moving averages of the square error (computed by the error computing part 52) between the relevant weight vector arrays. In accordance with the comparison, the error comparison part 6 sends a control signal to the computation part 5 so as to command it to terminate the computation of the weight vector array which has a relatively larger moving average. In response to the command, the computation part 5 terminates the designated weight vector array computation.

Next, the operation performed by the computation part 5 (i.e., the weight array computing part 51 and the error computing part 52) and the error comparison part 6 will be explained with reference to Fig. 5. Fig. 5 is a flowchart showing the flow of the adaptive control process in the present embodiment.

In Fig. 5, the weight array computing part 51 computes a plurality of weight vector arrays in parallel at different timings K (see step S1). For each weight vector array under computation, the error computing part 52 computes the square error and its moving average with respect to the relevant reference signal (see step S2).

Fig. 6 shows the timings of parallel computations for a plurality of weight vector arrays. As shown in Fig. 6, within the weight computation range M, a plurality of weight vector arrays are computed in parallel, where each computation starts at a different time. For each weight vector array, the square error $e^2_K(j)$ and its moving average $e_{Kavg}(j)$ are computed.

Also as shown in Fig. 6, at the present reception sample time j, there is (i) a weight vector array computation which has already been completed, (ii) a weight vector array computation which is being executed, and (iii) a weight vector array computation which has not yet been started.

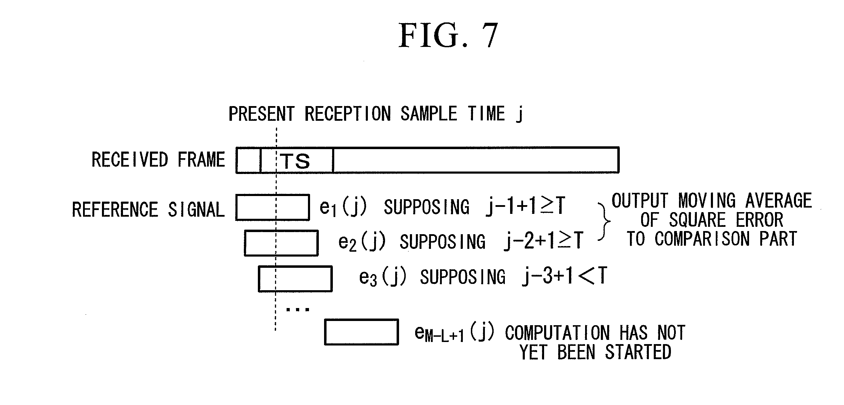

Next, the error comparison part 6 compares the moving averages $e_{Kavg}(j)$ of the square error (of the relevant weight vector arrays), which have been computed by the error computing part 52. Here, the weight vector arrays, whose computation has converged to a certain degree, are selected and compared. More specifically, as shown in Fig. 7, the weight vector arrays, which have been computed for a predetermined time T, are compared. The predetermined time T is a time corresponding to the number of turns in computation, which are required for obtaining a considerable convergence in each weight vector array.

Based on the comparison, the error comparison part 6 terminates the computation (in the computation part 5) of the weight vector array having a larger moving average $e_{Kavg}(j)$ (see step S4).

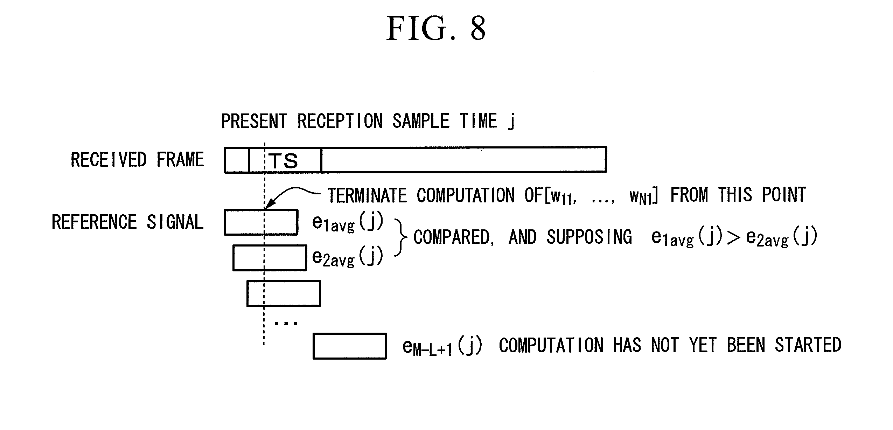

Accordingly, as shown in Fig. 8, among the weight vector arrays which are presently computed by the computation part 5 at the present reception sample time j, the relevant computation (i.e., computation of the weight vector array, square error thereof, and its moving average) of the weight vector array having a larger moving average $e_{Kavg}(j)$ is terminated.

If the computation of the designated weight vector array (as a target for the termination) has already been completed, the computation part 5 discards the result of the computation. In addition, the error comparison part 6 stores the moving average $e_{Kavg}(j)$ of the weight vector array, which is not designated as a target for termination of the computation, in memory for the next comparison.

When only one weight vector array has remained, and the number of turns for the computation of this weight vector array has reached L (i.e., reaches the length of the reference signal) (see "YES" of step S5), then the computation part 5 outputs the result of computation of the weight vector array to the weighting synthesizing part 4. Otherwise, the operation returns to step S1.

If there are a plurality of remaining weight vector arrays even when j has reached M, then the weight vector array having the smallest square error is selected and output to the weighting synthesizing part 4.

As described above, in accordance with the present embodiment, even though a plurality of weight vector arrays are computed at timings K (K=1, 2, ..., M-L+1) in a weight computation range, computation of each weight vector array, having a larger moving average of the square error at the relevant timing, is sequentially terminated, and resources for the terminated computation are released. The resources include memory units for storing error values or timing data (stored in a storage part), and for performing computation, a time period in which the performance of the computation part is occupied, a memory area for storing received signals at the relevant timing, and the like. As a result, it is possible to obtain the best weight vector array and the best synchronization timing for reducing the amount of computation.

Also in the present embodiment, when the time T, which is required for the weight vector array to converge to a certain level, is set to an appropriate value, a larger reduction in the amount of computation is anticipated. Generally, in the first half of the weight vector array computation, the square error decreases rapidly, and in the second half thereof, decreases slowly. Therefore, it is preferable to set the time T to approximately 1/3 to 1/2 of the length L of the reference signal. Accordingly, if the time T is set to 1/2 of the length L of the reference signal, the amount of computation can be reduced to approximately half in comparison with the conventional technique disclosed in Patent Document 1.

In the present embodiment, the moving averages of the square error are compared to each other. However, another method may be employed for performing the required determination.

For example, when the moving average of the square error has decreased below a predetermined value, the weight vector array computation may be terminated, and the relevant weight vector array may be output to the weighting synthesizing part 4. In this case, in addition to the reduction of the amount of computation, the time required until the weight vector array is applied to the relevant received signal can be reduced.

Also in the present embodiment, the moving average of square error is employed as a target error in the adaptive control process. However, this is not a limiting condition, and one of various error values can be used.

In addition, when the variation in the relevant error changes from a decrease phase to an increase phase in accordance with the elapse of time, relevant computation resources may be released so as to terminate the error computation.

Also in the present embodiment, the error comparison in adaptive control is executed at each reception sample time. However, as shown in Fig. 9, it may be executed at regular intervals Q. Fig. 9 shows a state in which after a specific time T, the error comparison in adaptive control is executed at regular intervals Q.

As another method, as the error targeted in an adaptive signal processing, the moving average of the relevant square error can be replaced with any one of various values.

For example, a method for determining a timing for performing adaptive control will be explained, in which a correlation operation is performed using a training sequence which is a known signal included in each received signal.

In the correlation operation, when the training sequence included in the relevant received signal and a known signal set in the correlation operation part are close to each other, that is, when the error value (i.e., moving average of square error) of the above-described embodiment is small, the absolute value of the correlation value is close to 1. In contrast, when the error is large, the absolute value of the correlation value is close to 0. Accordingly, "1- (absolute value of the correlation value)" can be used as the target error.

In this case, the error computing part 52 in Fig. 4 can perform the relevant correlation operation. That is, in order to obtain the timing for the relevant adaptive control, the error computing part 52 performs the relevant correlation operation at a plurality of timings, so as to compute each error by using the above-described method. The error comparison part 6 compares the computed errors, and releases the resources required for the correlation operation performed at a timing which has been determined to produce a larger error, based on the result of comparison. The resources include memory units necessary for storing error values or timing data (stored in a storage part), and for computing correlation, a time period in which the performance of the computation part is occupied, a memory area for storing received signals at the relevant timing, and the like.

When it is detected that the error has a minimum value at the timing at which the error is smaller in accordance with the error comparison, then the error computation is terminated, and the detected timing is stored. At the stored timing, the relevant weighting computation is performed.

Even though the two embodiments have been explained, the present invention can be applied to various types of wireless communication apparatuses (e.g., apparatuses for a base station, a mobile station, and the like).

The embodiment of the present invention has been explained with reference to the drawings. However, concrete structures are not limited to the embodiment, and design modifications or the like can be made without departing from the scope of the present invention.

INDUSTRIAL APPLICABILITY

The present invention is preferably applied to a wireless base station which communicates with each terminal by using communication channels which are divided by means of SDMA and FDMA.

**Claims**

1. An adaptive array antenna apparatus for performing adaptive control based on received signals received by a plurality of antenna elements which form an array antenna, the apparatus comprising:

   a computation part for computing an error of the received signals at different timings;
   an error comparison part for comparing the errors at the different timings with each other; and
   a weighting synthesizing part for performing weighting synthesis based on results of the comparison, wherein:
   based on the results of the comparison, the computation part releases at least a part of computation resources required for the computation of the errors, and terminates the computation of the errors.

2. The adaptive array antenna apparatus in accordance with claim 1, wherein:

   the computation part performs the release of the computation resources when it is determined that the error has a minimum value, and terminates the computation of the errors.

3. The adaptive array antenna apparatus in accordance with claim 2, wherein:

   the computation part performs the release of the computation resources when the error has decreased below a predetermined value, and terminates the computation of the errors.

4. The adaptive array antenna apparatus in accordance with claim 2, wherein:

   the computation part performs the release of the computation resources when a variation in the error has changed from a decrease phase to an increase phase in accordance with the elapse of time, and terminates the computation of the errors.

5. An adaptive control method for performing adaptive control based on received signals received by a plurality of antenna elements which form an array antenna, the method comprising:

   an error computing step of computing an error of the received signals at different timings;
   an error comparison step of comparing the errors at the different timings with each other;
   a computation step of releasing computation resources required for the computation of the errors when it is determined based on the comparison that the error is relatively small; and
   a control step of performing weighting control of each antenna element based on the computation resources when it is determined based on the comparison that the error is relatively small.

6. The adaptive control method in accordance with claim 5, wherein:

   in the computation step, when it is determined that a timing at which the error has a minimum value has been obtained, the release of the computation resources is performed.

7. The adaptive control method in accordance with claim 5, wherein:

   in the computation step, when the error has decreased below a predetermined value, the release of the computation resources is performed.

8. The adaptive control method in accordance with claim 5, wherein:

in the computation step, when a variation in the error has changed from a decrease phase to an increase phase in accordance with the elapse of time, the release of the computation resources is performed.

9. The adaptive control method in accordance with claim 5, wherein:

the control step includes detecting a timing at which the error is minimized within a predetermined time period, and performing the weighting control of each antenna element at the detected timing.

# FIG. 1

# FIG. 2

# FIG. 3

$x_1$
$x_2$
$x_N$

INPUT FROM DELAY PART

$w_1$
$w_2$
$w_N$

41

42

OUTPUT ARRAY

4

INPUT WEIGHT ARRAY

# FIG. 4

$x_1(j)$ $x_N(j)$

REFERENCE SIGNAL

WEIGHT ARRAY COMPUTING PART

ERROR COMPUTING PART

51

52

5

CONTROL SIGNAL FROM ERROR COMPARISON PART

OUTPUT TO ERROR COMPARISON PART

# FIG. 5

```
        ( START )
            │
            ▼
┌──────────────────────────────────┐
│ COMPUTE WEIGHT VECTOR ARRAYS      │─── S1
│ IN PARALLEL AT RECEPTION TIMINGS K│
└──────────────────────────────────┘
            │
            ▼
┌──────────────────────────────────┐
│ SEQUENTIALLY COMPUTE MOVING       │─── S2
│ AVERAGES OF SQUARE ERROR          │
└──────────────────────────────────┘
            │
            ▼
┌──────────────────────────────────┐
│ COMPARISON                        │─── S3
└──────────────────────────────────┘
            │
            ▼
┌──────────────────────────────────┐
│ TERMINATE WEIGHT VECTOR ARRAY     │─── S4
│ COMPUTATION HAVING LARGER         │
│ MOVING AVERAGE                    │
└──────────────────────────────────┘
            │
  NO  ◄─────◄ END? ►───── S5
            │ YES
            ▼
┌──────────────────────────────────┐
│ OUTPUT LAST-REMAINING             │─── S6
│ WEIGHT VECTOR ARRAY               │
└──────────────────────────────────┘
            │
            ▼
        ( END )
```

# FIG. 6

PRESENT RECEPTION SAMPLE TIME $j$

RECEIVED FRAME    | | TS | |

REFERENCE SIGNAL

$e_1(j)$ K=1 COMPUTATION HAS BEEN COMPLETED

$e_2(j)$ K=2
$e_3(j)$ K=3 } UNDER COMPUTATION

$e_{M-L+1}(j)$ K=M-L+1
COMPUTATION HAS NOT YET
BEEN STARTED

WEIGHT COMPUTATION
RANGE M

# FIG. 7

PRESENT RECEPTION SAMPLE TIME j

RECEIVED FRAME

REFERENCE SIGNAL

$e_1(j)$ SUPPOSING $j-1+1 \geq T$
$e_2(j)$ SUPPOSING $j-2+1 \geq T$
$e_3(j)$ SUPPOSING $j-3+1 < T$

$\cdots$

$e_{M-L+1}(j)$ COMPUTATION HAS NOT YET BEEN STARTED

OUTPUT MOVING AVERAGE OF SQUARE ERROR TO COMPARISON PART

EP 1 990 931 A1

# FIG. 8

PRESENT RECEPTION SAMPLE TIME j

RECEIVED FRAME

REFERENCE SIGNAL

TS

TERMINATE COMPUTATION OF$[w_{11}, \ldots, w_{N1}]$ FROM THIS POINT

$e_{1avg}(j)$

$e_{2avg}(j)$

$\left.\right\}$ COMPARED, AND SUPPOSING $e_{1avg}(j) > e_{2avg}(j)$

$\cdots$

$e_{M-L+1}(j)$ COMPUTATION HAS NOT YET BEEN STARTED

EP 1 990 931 A1

# FIG. 9

RECEIVED FRAME

| | TS | |

REFERENCE SIGNAL

T Q

# FIG. 10

RECEIVED FRAME

| | TS | |

REFERENCE SIGNAL

SLIDING CORRELATION

SYNCHRONIZATION TIMING
(WEIGHT COMPUTING TIMING)

## INTERNATIONAL SEARCH REPORT

| | International application No. |
|---|---|
| | PCT/JP2007/053414 |

**A. CLASSIFICATION OF SUBJECT MATTER**
*H04B7/08*(2006.01)i, *H04B7/10*(2006.01)i

According to International Patent Classification (IPC) or to both national classification and IPC

**B. FIELDS SEARCHED**

Minimum documentation searched (classification system followed by classification symbols)
H04B7/08, H04B7/10

Documentation searched other than minimum documentation to the extent that such documents are included in the fields searched
Jitsuyo Shinan Koho        1922-1996    Jitsuyo Shinan Toroku Koho    1996-2007
Kokai Jitsuyo Shinan Koho   1971-2007    Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-354322 A  (Japan Radio Co., Ltd.), 22 December, 2005 (22.12.05), Par. Nos. [0027] to [0035]; Figs. 2, 4, 5 (Family: none) | 1-9 |

☐  Further documents are listed in the continuation of Box C.        ☐  See patent family annex.

| | |
|---|---|
| *    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    09 May, 2007 (09.05.07) | Date of mailing of the international search report<br>    22 May, 2007 (22.05.07) |
|---|---|
| Name and mailing address of the ISA/<br>    Japanese Patent Office | Authorized officer |
| Facsimile No. | Telephone No. |

Form PCT/ISA/210 (second sheet) (April 2005)

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006050004 A

- JP 2003244110 A